# EUROPEAN PATENT SPECIFICATION

(11) **EP 4 019 228 B1**
(45) Date of publication and mention of the grant of the patent: **31.12.2025**
(21) Application number: 21211014.2
(22) Date of filing: 29.11.2021
(51) Int. Cl.: B29C 65/36, B65B 9/20, B65B 51/10, B65B 51/22, B65B 51/30, H05B 6/14

(54) **INDUCTION HEATING SEALING SYSTEM AND METHOD**
SYSTEM UND VERFAHREN ZUM VERSIEGELN DURCH INDUKTIONSERWÄRMUNG
SYSTÈME ET MÉTHODE DE SCELLAGE PAR CHAUFFAGE PAR INDUCTION

(30) Priority: 22.12.2020 EP 20216431
(43) Date of publication of application: 29.06.2022
(73) Proprietor: Tetra Laval Holdings & Finance S.A., 1009 Pully (CH)
(72) Inventor: RÅBE, Magnus, 23254 Åkarp (SE); WIJK, Magnus, 226 55 Lund (SE); BETTI BENEVENTI, Giovanni, 41124 Modena (IT)
(74) Representative: Tetra Pak Patent Attorneys

(56) References cited:
- EP-A1- 1 820 732
- WO-A1-2006/065211
- WO-A1-2015/158502
- WO-A2-2011/003565
- CA-A- 921 565
- JP-A- H08 230 834
- US-A- 3 864 186
- US-A- 4 371 768
- US-A- 4 704 509
- US-A- 5 968 399

## Description

### Technical Field

The present invention relates to an induction heating sealing device for induction welding of a packaging material in a package producing machine. The present invention also relates to a method for manufacturing a packaging container.

### Background

The welding of laminated packing material by means of induction heating is commonly used in the packaging industry. One example of such laminated material is a carrier layer of paper, a barrier layer in the form of an aluminum foil, and thermoplastic coatings along the inner and outer surfaces of the laminate. The technique of induction welding is based on the Faraday's law, by which an alternating magnetic field generated around a conductor is capable of inducing an electrical current in another conductor placed in close proximity (workpiece). Heat is then generated in the workpiece due to Joule effect. Thus, in induction welding, an inductor is arranged close to the laminate containing the aluminum foil, and the laminate is pressed together with the material to which it is to be joined; typically, two layers of the packaging material are pressed together. The aluminum foil is heated by means of induction to a temperature which is high enough to melt adjoining layers of thermoplastic, causing the combined thermoplastic layers to fuse together, thus producing a tight and durable seal.

Examples of induction heating sealing systems are disclosed in patent documents WO2006/065211A1, EP1820732A1, WO2011/03565A2 and WO2015/158502A1, in the name of the patentee.

The welding process is dependent on several parameters, such as inductor and workpiece properties. For packaging materials currently on the market the workpiece is an aluminum foil having a thickness of about 6 microns. In order to provide efficient and robust seals, the inductor is powered by an AC power source generating a variable-voltage/current having a frequency of around 535 kHz. While this setup has proven extremely good results in terms of sealing quality, it is rather sensitive to the relative positions between the inductor and the workpiece, i.e. the packaging material.

Induction heating may be used to provide a longitudinal sealing as well as a transversal sealing. Longitudinal welding is normally performed continuously in order to longitudinally seal a web of packaging material running in a package producing machine. The web of packaging material, being initially planar, is folded to a tube shape with overlapping longitudinal edges. These overlapping edges are running along a longitudinally oriented inductor, which provides for the inductive heating of the packaging material thereby forming the longitudinal seal of the tube of packaging material.

As the web of packaging material is flexible, it is difficult to ensure correct position of the area to be sealed (i.e. the overlapping longitudinal edges) relative the normally stationary inductor. During operation of a package producing machine the tube of packaging material may be subject to motion in other directions than the machine direction, thereby causing the sealing area to be misaligned with the inductor.

Electromagnetic simulations have been made analyzing the sensitivity of the induction heating process with regards to faulty positioning of the overlapping edges of the packaging material at the position of the inductor. Especially, the induction heating efficiency, and power density uniformity in the sealing area were evaluated for deviations, compared to the reference position, in gap, tilt angle, and offset of the sealing area in relation to the inductor. To further explain, the inductor can be observed as a rectangular body facing a planar sealing area. The gap is the desired distance in the normal direction between the inductor and the sealing area (reference: Gap=0). The tilt angle is the angle of the plane of the inductor relative the plane of the sealing area (reference: Angle=0), and the offset is a misalignment in a direction parallel with the planes of the inductor and the sealing area (reference: Offset=0).

For the above-mentioned setup using a workpiece made of aluminium 6063, having a thickness of 6.35 microns, and operating the AC power source at a frequency of 535 kHz, the following observations were made, considering a typical inductor used in longitudinal sealing applications.

| | Gap: -0.5 ÷ 1.5mm | Angle: -3°÷ 3° | Offset: -3 ÷ 3 mm |
|---|---|---|---|
| Uniformity variations | 13% | 10% | 23% |
| Efficiency variations | 4% | 7% | 24% |

Percentage variations must be interpreted as referred to the nominal uniformity and efficiency corresponding to the reference position.

From the table above it is evident that installation of the inductor and precise control of the sealing area is important in order to control the quality of the longitudinal seal. This requires manual check and operation, preferably only allowing skilled and expert trained engineers.

In view of the above, it would be desired to provide an improved induction heating sealing device, as well as an improved induction heating sealing system, which is more robust and less sensitive to positioning of the packaging material in relation to the inductor.

### Summary

In view of the above disadvantages of the prior art solutions, there is a need for an induction heating sealing device and system which provides reliable results while being less dependent on exact positioning of the components used for induction heating of the packaging material.

The inventors have surprisingly realized that this object can be achieved by strongly reducing the workpiece thickness in order to lower the eddy current on the workpiece, hence to lower the counter magnetic field provided by the workpiece in response to the primary magnetic field generated by the inductor (Lenz's law). In parallel to workpiece thickness reduction, in order to still keep a relatively high induced power to melt the polymer in the package, the magnetic field frequency must be increased, such that an increased electromotive force is induced in the workpiece (Faraday's law). The increase of frequency allows the system to provide sufficient power to the workpiece without the need of increasing the current in the inductor up to values such high to hamper system reliability, avoiding then overheating or electrical discharge risks.

According to a first aspect, an induction heating sealing system for induction welding of a packaging material is provided according to claim 1. The packaging material is configured to be transformed into sealed packages of pourable food products in a package producing machine, and the packaging material is having at least one layer of metallized film. The induction heating sealing device comprises an AC power source and an inductor coil connected to the AC power source and configured to induce eddy currents in a metallized film for inductive heating of the packaging material. The AC power source is configured to generate a variable-voltage/current signal of a frequency higher than 1 MHz and below 30 MHz. The metallized film may be a metallization coating. The packaging material is then having at least one layer of a metallization coating onto a substrate being polymer film or paper or other cellulose-based substrate/sheet.

According to the invention, the AC power source is configured to generate a variable-voltage signal of a frequency in the range of 1 MHz to 30 MHz, preferably the frequency is 6,78 MHz or 13,56 MHz, available for industrial purposes. Also, a frequency of 27,12 MHz could be considered. At the other end of the interval, a frequency around 2 MHz could be used, thereby allowing standard AC power sources to provide the required magnetic field. All of these frequencies have proven to provide the high efficiency needed to keep the induced power constant in the packaging material, without increasing the inductor current to level which could hamper overall induction heating system reliability and they are further available for industrial purposes.

The inductor coil may be configured to provide a longitudinal sealing to a tube-shaped web of packaging material, or to provide a transverse sealing to a tube-shaped web of packaging material. Hence, the inductor may be used for the most common sealing operations in a modern package producing machine thereby providing efficient and robust sealings of a packaging container, especially for such packaging containers enclosing liquid food. Food safety is a critical issue in manufacturing liquid food packaging containers why the quality of the sealings is an important factor for determining the shelf life of the contained product.

The induction heating sealing system comprises a packaging material having at least one layer of metallized film, and an induction heating sealing device comprising an AC power source and an inductor coil connected to the AC power source. The inductor coil is configured to induce eddy currents in the metallized film for inductive heating of the packaging material, wherein the AC power source is configured to generate a variable-voltage/current signal of a frequency higher than 1 MHz, and below 30 MHz.

By replacing the aluminum foil, which typically has a thickness of around 6 microns, by a metallized film, the amount of metal content of the packaging material is drastically reduced. Yet further, the reduction of thickness of the aluminum has proven to match extremely well with the frequency of the AC power source, thereby improving efficiency of the sealing system and reducing the sensitivity of the sealing system.

The metallized film comprises a metal layer, such as aluminum, having a thickness below 0.5 µm, preferably the thickness of the metal layer is between 20 and 70 nm, even more preferably between 25 and 50 nm. The metal layer may thus be provided using existing metal deposition techniques.

The metal layer may have a sheet resistance between 0.5 and 10 Ω/sq. The inventors have realized that the efficiency of the sealing system is dependent on the sheet resistance, where a sufficient level of efficiency may be obtained for the particular range of the sheet resistance.

The AC power source is configured to generate a variable-voltage/current signal of a frequency in the range of 1 MHz to 30 MHz, preferably the frequency is around 2 MHz, 6,78 MHz, 13,56 MHz, or 27,12 MHz.

The packaging material may comprise an innermost heat sealable thermoplastic layer having a melting temperature being lower than the melting temperature of the metallized film. This prevents the metallized film, and especially the metal layer, from being destructed before a sufficient sealing temperature of the innermost heat sealable thermoplastic layer has been reached.

According to a second aspect, a package producing machine is provided according to claim 10. The package producing machine comprises at least one induction heating sealing system according to the first aspect.

According to a third aspect, a method for manufacturing a packaging container is provided according to claim 11. The method comprises i) providing a packaging material having at least one layer of metallized film, ii) arranging at least two layers of the packaging material at an inductor coil of an induction heating sealing device, iii) powering the inductor coil by controlling an AC power source to generate a variable-voltage/current signal of a frequency higher than 1 MHz, and iv) heat sealing at least two layers of packaging material by inducing eddy currents in the metallized film for inductive heating of the packaging material.

Powering the inductor coil may be performed by controlling the AC power source to generate a variable-voltage/current signal of a frequency in the range of 1 MHz to 30 MHz, preferably the frequency is around 2 MHz, 6,78 MHz, 13,56 MHz, or 27,12 MHz.

The inductor coil may be longitudinally oriented in order to provide a longitudinal sealing of the packaging material, or the inductor coil may be transversally oriented in order to provide a transversal sealing of the packaging material.

### Brief Description of the Drawings

Embodiments of the invention will now be described, by way of example, with reference to the accompanying schematic drawings, in which
Fig. 1 is a schematic view of a package producing machine,
Fig. 2 is an isometric view of an induction heating sealing system according to an embodiment;
Fig. 3 is a side view of an induction heating sealing system according to another embodiment;
Fig. 4 is a schematic view of an induction heating sealing device according to an embodiment;
Fig. 5 is a cross-sectional view of a packaging material forming part of an induction heating sealing system according to an embodiment;
Fig. 6 is a diagram showing the efficiency of a typical induction heating sealing system as a function of workpiece thickness, varying the frequency of the magnetic field;
Fig. 7 is a diagram showing the efficiency of another typical induction heating sealing system as a function of sheet resistance, varying the frequency of the magnetic field; and
Fig. 8 is a schematic view of a method according to an embodiment.

### Detailed Description

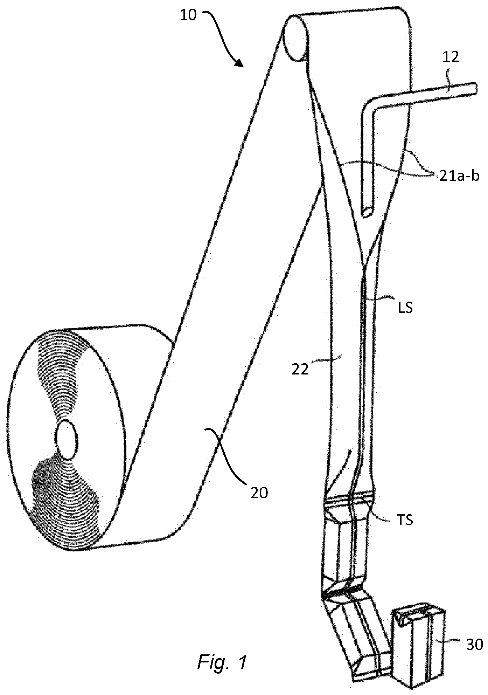

Starting in Fig. 1, the basic principle of a roll fed carton based package producing machine 10 is shown. The package producing machine 10 is configured for continuous packaging of e.g. liquid food products, and forms the general technical concept used for various different packaging systems, such as the commercially successful Tetra Brik^{®} packaging system. The package producing machine 10 receives a packaging material 20, preferably in the form of a continuous web (as is shown in Fig. 1).

After unwinding the packaging material 20 its longitudinal side edges 21a, 21b are brought together to form a longitudinal seal LS, thereby also forming a tube 22 of the packaging material 20. More particularly, the longitudinal side edges 21a, 21b are attached to each other continuously in an overlapping manner, possibly by adding a strip to one of the edges 21a, 21b. The tube 22 is filled with a desired product, preferably a liquid food product, from a filling pipe 12.

A series of packages 30 are formed from the tube 22 by making transversal sealings TS at an end of the tube 22, and cutting off the sealed portions, each sealed portion representing an individual package 30, as they are formed. In order to shape the packages 30 different forming tools can be used during the transversal sealing operation, or a separate forming process can be performed after the transversal sealing has been performed.

Alternatively, a blanks fed packaging machine is used. The blanks, in the form of pre-cut pieces of packaging material with two ends heat sealed together such that a folded tubular sleeve is formed, are fed to the filling machine. The blanks are erected into an open sleeve, and then folded and sealed such that a closed top or bottom is formed. It is thereafter filled with product and sealed and folded such that a filled package container is obtained.

With regards to Fig. 1 and the example shown therein, it should be mentioned that the term "longitudinal" is referring to the feeding direction of the tube 22, i.e. the machine feeding direction. The term "transversal" is referring to a direction perpendicular to the longitudinal direction.

The longitudinal sealing LS and/or the transversal sealing TS may be provided by means of an induction heating sealing device according to various embodiments which will be described in the following.

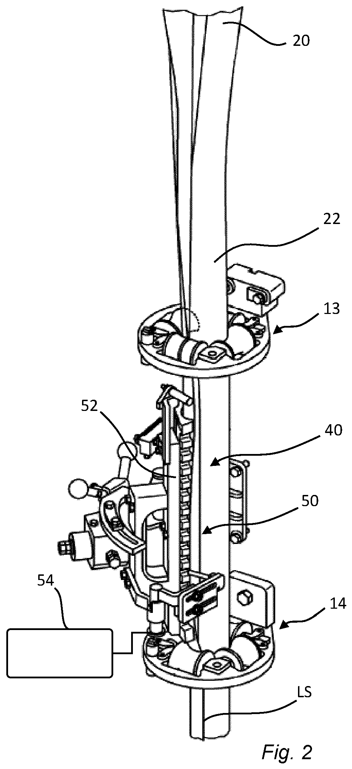

In Fig. 2, an example of an induction heating sealing system 40 is shown. The induction heating sealing system 40 is configured to provide the longitudinal sealing LS to a tube 22 of packaging material 20.

Before reaching the induction heating sealing system 40, the web of packaging material 20 interacts gradually with a forming assembly 13, and is folded to superimpose the longitudinal edges of the packaging material 20 in order to form the shape of the tube 22.

The induction heating sealing system 40 comprises an induction heating sealing device 50, as well as the packaging material 20. The induction heating sealing device 50 comprises an induction coil 52 and an AC power generator 54 coupled to the induction coil 52.

By activation of the induction heating sealing device 50 (which preferably is constantly operating in order to provide a continuous longitudinal sealing LS), the overlapping longitudinal edges of the packaging material 20 will be heated in order to melt innermost heat sealable thermoplastic layers of the packaging material 20.

Heating will occur due to the alternate current of the inductor coil 52 which will generate eddy currents in a metallized film of the packaging material.

Next, the tube 22 is fed through a circular passage defined by an arrangement 14 of forming rollers and pressure rollers. The longitudinal edges of the packaging material 20 are thereby compressed to blend the heat sealable thermoplastic layers of the longitudinal edges of the packaging material 20, thereby forming the longitudinal sealing LS.

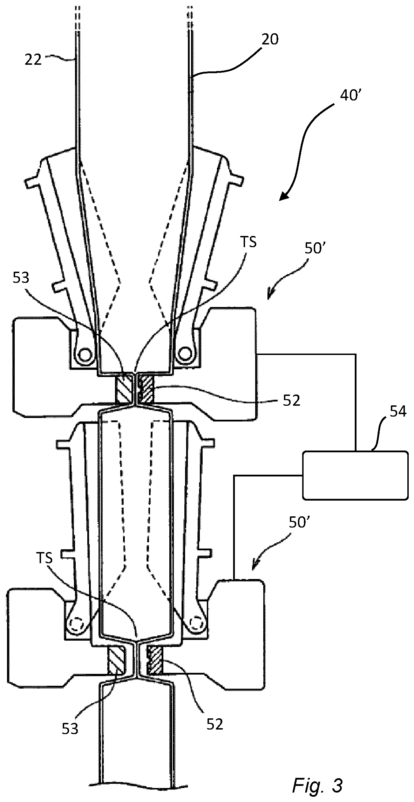

In Fig. 3, another example of an induction heating sealing system 40' is shown. The induction heating sealing system 40' is configured to provide the transversal sealing TS to the tube 22 of packaging material 20, which tube 22 is already provided with the longitudinal sealing LS.

In the shown example the induction heating sealing system 40' comprises the packaging material 20 and two induction heating sealing devices 50'. One induction heating sealing device 50' is arranged downstream another induction heating sealing device 50'.

As for the induction heating sealing device 50 described with reference to Fig. 2, the induction heating sealing devices 50' of Fig. 3 each comprises an inductor coil 52 and an AC power source 54. However, as indicated in Fig. 3 the two induction heating sealing devices 50' share a common AC power source 54.

By operation of the induction heating sealing system 40', the inductor coil 52 and a counter element 53, both positioned on movable sealing jaws, will move and press together the filled packaging material tube 22. As electromagnetics losses, e.g. eddy currents, are generated in the metallized film of the packaging material 20, the packaging material 20 will be heated to form the transversal seal TS at every predetermined interval by means of the induction heating.

It should be mentioned that the movement of the sealing jaws will also provide a forward motion of the tube 22, whereby the transversal seals TS will be arranged at predetermined intervals.

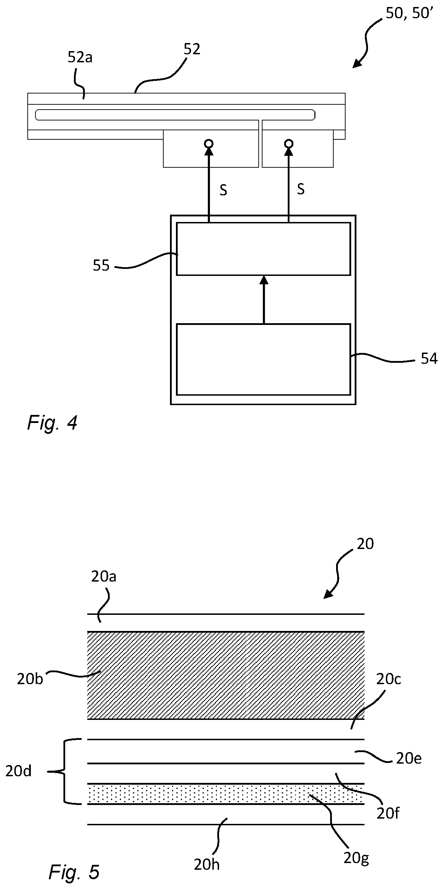

A schematic view of an induction heating sealing device 50, 50' is shown in Fig. 4. The inductor coil 52 has an elongated shape, and a welding surface 52a is adapted to face the area to be sealed of the packaging material 20. It should be noted that the exact configuration and design of the induction coil 52 could be modified substantially from what is shown in Fig. 4, as long as it is enable to provide induction heating of a packaging material 20 in a package producing machine 10.

The inductor coil 52 is connected to an AC power source 54, which also forms part of the induction heating sealing device 50, 50'. The AC power source 54 is configured to generate an alternating magnetic field leading to current or voltage signals S of a frequency of 1 MHz to 30 MHz, in particular around 2 MHz, 6,78 MHz, 13,56 MHz, or 27,12 MHz. The peak voltage may be around a few hundred (e.g. 500) Volts, the power signal S may be continuous or pulsed, and the maximum power may be in the range of e.g. 2500 Watts.

The inductor coil 52 is defined by a winding which receives the alternating power signal S to generate a pulsating magnetic field which in turn produces eddy currents in the packaging material 20. For this the packaging material 20, which forms part of an induction heating sealing system 40 as explained above, comprises a workpiece in the form of a metal layer of a metallized film.

Eddy currents arise in the workpiece when it is subjected to the high frequency magnetic field from the inductor coil 52. This workpiece, which traditionally has been provided in the form of an aluminum layer having a thickness of around 6 microns, is instead provided as a metallized film included in the packaging material 20.

An example of a packaging material 20 is shown in Fig. 5, in cross-section. It should be noted that the different thicknesses of the various layers 20a-h illustrated in Fig. 5, including the metal layer 20g of the metallized film 20d, are not to scale.

The metal layer 20g, i.e. the workpiece, could be arranged at any of the interfaces between the different packaging material layers.

Starting from the exterior side of the packaging material 20, i.e. the side intended to form the outside of the final package 30, the packaging material 20 is formed by a décor layer 20a arranged on top of a core bulk layer 20b. The core bulk layer 20b may be a fibre-based material, such as a cellulose-based material. The core bulk layer 20b may be a cellulose-based material, such as a paper or a carton or paperboard. The packaging material 20 also has a thin layer 20c of LDPE covering the opposite side of the core bulk layer 20b. A metallized film 20d is laminated to the LDPE layer 20c. The metallized film 20d may e.g. comprise a thin paper layer 20e, an intermediate layer 20f of PVOH optionally blended with starch, and the metal layer 20g forming the work piece of the induction heating sealing system 40, 40'. The metal layer 20g may e.g. be an aluminum layer having a thickness of 20-70 nm, such as around 50 nm. On the inner side of the metallized film 20d an innermost heat sealable thermoplastic layer 20h is arranged.

The metallized film 20d can e.g. be embedded in the packaging material 20, or it may be arranged on the exterior surface of the packaging material 20.

Although not explained earlier, in some embodiments the metallized film 20d could be distributed across the entire width and length of the packaging material 20 such that the metallized film 20d forms a continuous layer.

However, in order to allow for induction sealing it is necessary to provide the metallized film 20d only locally at one or more areas, thereby forming local workpieces of the associated sealing systems 40, 40'.

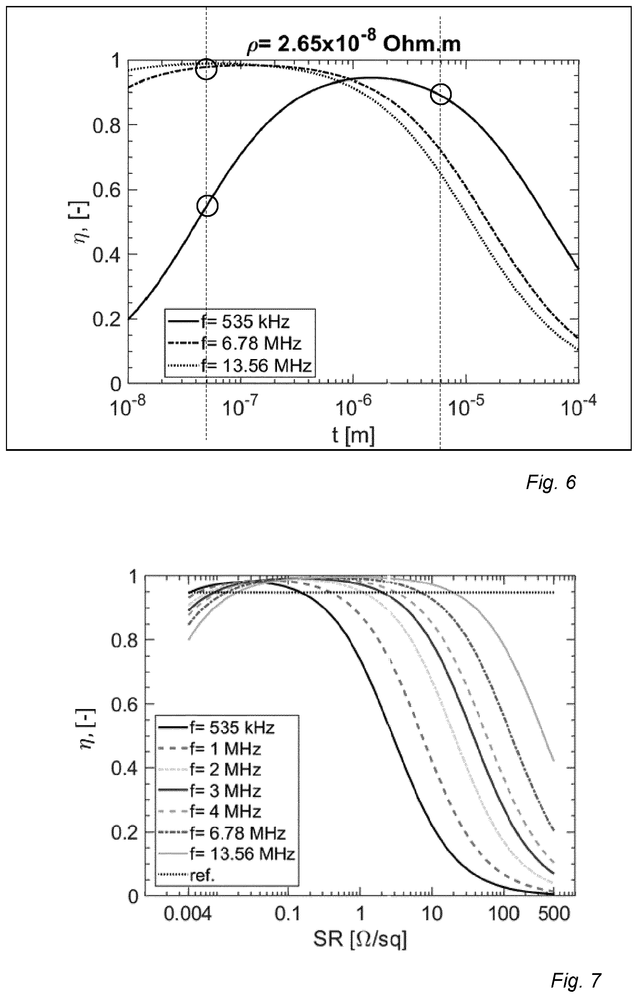

Now turning to Fig. 6, a diagram showing some properties of the above-described induction heating sealing systems 40, 40' will be discussed. The diagram is showing the efficiency of an induction heating sealing system as a function of thickness (*t*) of the workpiece, i.e. the thickness of the metal layer 20g in the embodiments described herein. The plotted efficiency (*η*) is the induction efficiency, i.e. the power on the whole metal layer workpiece 20g divided by the total delivered power to both workpiece and inductor. Three different curves are plotted; the solid line representing a power signal of 535 kHz, the dashed line representing a power signal of 6.78 MHz, and the dotted line representing a power signal of 13.56 MHz.

Starting with the 535 kHz curve, two circles are marked. One marks a thickness of 50 nm. Here, the efficiency is slightly above 0.5. The other circle marks a thickness of around 6 microns, and hence this marks the prior art setup. Here, the efficiency is around 0.9.

For higher frequencies, i.e. 6,78 and 13,56 MHz, respectively, the efficiency is significantly higher for thin metal layers 20g. This is indicated by the circle, marking a thickness of 50 nm on the curves corresponding to the above frequencies. For all curves, the material of the work piece is aluminum 6063, having a resistivity (p) of 2,65*10⁻⁸Ω.m.

As is evident from the curves of Fig. 6, using a higher frequency the efficiency can be much higher than using the prior art frequency, especially when the workpiece is a thin metal film.

In Fig. 7 another diagram is shown, to show the same concept above but in terms of sheet resistance, defined as SR = *p*/*t,* where the efficiency of another induction sealing system is plotted as a function of sheet resistance for a number of different frequencies of the magnetic field. As can be seen, the efficiency is kept at a maximum level for a larger interval of the sheet resistance; while the low frequency of 535 kHz provides for a high efficiency when the sheet resistance is below 0.1 Ω/sq, hence, for relatively thick workpiece, while the frequency of 13,56 MHz provides for maximum efficiency when the sheet resistance is between 0,1 and 10 Ω/sq.

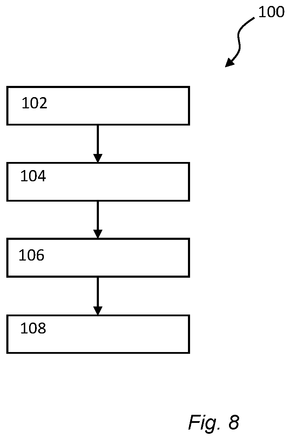

Now turning to Fig. 8, a method 100 for manufacturing a packaging container is schematically illustrated. The method 100 comprises a step 102 of providing a packaging material having at least one layer of metallized film, a step 104 of arranging at least two layers of the packaging material at an inductor coil of an induction heating sealing device, a step 106 of powering the inductor coil by controlling an AC power source to generate a variable-voltage/current signal of a frequency higher than 1 MHz, and a step 108 heat sealing the at least two layers of packaging material by inducing eddy currents in the metallized film for inductive heating of the packaging material.

The step 106 of powering the inductor coil is preferably performed by controlling the AC power source to generate a variable-voltage/current signal of a frequency in the range of 1 MHz to 30 MHz, preferably the frequency is around 2 MHz, 6,78 MHz, 13,56 MHz, or 27,12 MHz.

## Claims

1. An induction heating sealing system (40, 40'), comprising a packaging material (20) having at least one layer of metallized film (20d), and
an induction heating sealing device (50, 50') comprising an AC power source (54) and an inductor coil (52) connected to the AC power source (54) and configured to induce eddy currents in the metallized film (20d) for inductive heating of the packaging material (20), wherein the AC power source (54) is configured to generate a variable current or voltage signal (S) of a frequency in the range of 1 MHz to 30 MHz,
wherein the metallized film (20d) comprises a metal layer (20g) having a thickness below 0.5 µm.

2. The induction heating sealing system (40, 40') according to claim 1, wherein the thickness of the metal layer (20g) is between 20 and 70 nm.

3. The induction heating sealing system (40, 40') according to claim 2, wherein the thickness of the metal layer (20g) is between 25 and 50 nm.

4. The induction heating sealing system (40, 40') according to any of the preceding claims, wherein the metal layer (20g) has a sheet resistance between 0.5 and 10 Ω/sq.

5. The induction heating sealing system (40, 40') according to any of the preceding claims, wherein the metal layer (20g) is made of aluminum.

6. The induction heating sealing system (40, 40') according to any of the preceding claims, wherein said frequency is around 2 MHz.

7. The induction heating sealing system (40, 40') according to any of the preceding claims 1 to 5, wherein said frequency is around 6,78 MHz,13,56 MHz, or 27,12 MHz.

8. The induction heating sealing system (40, 40') according to any of the preceding claims, wherein the packaging material (20) comprises an innermost heat sealable thermoplastic layer (20h) having a melting temperature being lower than the melting temperature of the metallized film (20d).

9. The induction heating sealing system (40, 40') according to any of the preceding claims, wherein the inductor coil (52) is configured to provide a longitudinal sealing (LS) to a tube-shaped web of packaging material (22) or to provide a transverse sealing to the tube-shaped web of packaging material (22).

10. A package producing machine (10), comprising at least one induction heating sealing system (40, 40') according to any of the preceding claims.

11. A method for manufacturing a packaging container, comprising
providing a packaging material having at least one layer of metallized film,
arranging at least two layers of the packaging material at an inductor coil of an induction heating sealing device,
supplying the inductor coil with an AC power source to generate a variable-voltage or current signal of a frequency in the range of 1 MHz to 30 MHz, and
heat sealing the at least two layers of packaging material by inducing eddy currents in the metallized film for inductive heating of the packaging material,
wherein the metallized film (20d) comprises a metal layer (20g) having a thickness below 0.5 µm.

12. The method according to claim 11, wherein the frequency is around 2 MHz.

13. The method according to claim 11, wherein the frequency is around 6,78 MHz, 13,56 MHz, or 27,12 MHz.

14. The method according to any of claims 11 to 13, wherein the inductor coil is longitudinally oriented in order to provide a longitudinal sealing of the packaging material.

15. The method according to any of claims 11 to 13, wherein the inductor coil is transversally oriented in order to provide a transversal sealing of the packaging material.

## Patentansprüche

1. System (40, 40') zum Versiegeln durch Induktionserwärmung, umfassend ein Verpackungsmaterial (20) mit mindestens einer Schicht metallisierter Folie (20d), und
eine Vorrichtung (50, 50') zum Versiegeln durch Induktionserwärmung, umfassend eine Wechselstromleistungsquelle (54) und eine Induktorspule (52), die mit der Wechselstromleistungsquelle (54) verbunden und dazu ausgelegt ist, Wirbelströme in der metallisierten Folie (20d) zum induktiven Erwärmen des Verpackungsmaterials (20) zu induzieren, wobei die Wechselstromleistungsquelle (54) dazu ausgelegt ist, ein variables Strom- oder Spannungssignal (S) mit einer Frequenz im Bereich von 1 MHz bis 30 MHz zu generieren, wobei die metallisierte Folie (20d) eine Metallschicht (20g) mit einer Dicke unter 0,5 µm umfasst.

2. System (40, 40') zum Versiegeln durch Induktionserwärmung nach Anspruch 1, wobei die Dicke der Metallschicht (20g) zwischen 20 und 70 nm liegt.

3. System (40, 40') zum Versiegeln durch Induktionserwärmung nach Anspruch 2, wobei die Dicke der Metallschicht (20g) zwischen 25 und 50 nm liegt.

4. System (40, 40') zum Versiegeln durch Induktionserwärmung nach einem der vorhergehenden Ansprüche, wobei die Metallschicht (20g) einen Flächenwiderstand zwischen 0,5 und 10 Ω/sq aufweist.

5. System (40, 40') zum Versiegeln durch Induktionserwärmung nach einem der vorhergehenden Ansprüche, wobei die Metallschicht (20g) aus Aluminium gefertigt ist.

6. System (40, 40') zum Versiegeln durch Induktionserwärmung nach einem der vorhergehenden Ansprüche, wobei die Frequenz etwa 2 MHz beträgt.

7. System (40, 40') zum Versiegeln durch Induktionserwärmung nach einem der vorhergehenden Ansprüche 1 bis 5, wobei die Frequenz etwa 6,78 MHz, 13,56 MHz oder 27,12 MHz beträgt.

8. System (40, 40') zum Versiegeln durch Induktionserwärmung nach einem der vorhergehenden Ansprüche, wobei das Verpackungsmaterial (20) eine innerste heißversiegelbare thermoplastische Schicht (20h) mit einer Schmelztemperatur umfasst, die niedriger als die Schmelztemperatur der metallisierten Folie (20d) ist.

9. System (40, 40') zum Versiegeln durch Induktionserwärmung nach einem der vorhergehenden Ansprüche, wobei die Induktorspule (52) dazu ausgelegt ist, eine Längsversiegelung (LS) an einer schlauchförmigen Bahn aus Verpackungsmaterial (22) bereitzustellen oder eine Querversiegelung an der schlauchförmigen Bahn aus Verpackungsmaterial (22) bereitzustellen.

10. Verpackungsherstellungsmaschine (10), umfassend mindestens ein System (40, 40') zum Versiegeln durch Induktionserwärmung nach einem der vorhergehenden Ansprüche.

11. Verfahren zum Fertigen eines Verpackungsbehälters, umfassend
Bereitstellen eines Verpackungsmaterials mit mindestens einer Schicht aus metallisierter Folie,
Anordnen von mindestens zwei Schichten des Verpackungsmaterials an einer Induktorspule einer Vorrichtung zum Versiegeln durch Induktionserwärmung,
Versorgen der Induktorspule mit einer Wechselstromleistungsquelle, um ein variables Spannungs- oder Stromsignal mit einer Frequenz im Bereich von 1 MHz bis 30 MHz zu generieren, und
Heißversiegeln der mindestens zwei Schichten von Verpackungsmaterial durch Induzieren von Wirbelströmen in der metallisierten Folie zum induktiven Erwärmen des Verpackungsmaterials, wobei die metallisierte Folie (20d) eine Metallschicht (20g) mit einer Dicke unter 0,5 µm umfasst.

12. Verfahren nach Anspruch 11, wobei die Frequenz etwa 2 MHz beträgt.

13. Verfahren nach Anspruch 11, wobei die Frequenz etwa 6,78 MHz, 13,56 MHz oder 27,12 MHz beträgt.

14. Verfahren nach einem der Ansprüche 11 bis 13, wobei die Induktorspule in Längsrichtung orientiert ist, um eine Längsversiegelung des Verpackungsmaterials bereitzustellen.

15. Verfahren nach einem der Ansprüche 11 bis 13, wobei die Induktorspule quer orientiert ist, um eine Querversiegelung des Verpackungsmaterials bereitzustellen.

## Revendications

1. Système de scellage par chauffage par induction (40, 40'), comprenant un matériau d'emballage (20) ayant au moins une couche de film métallisé (20d), et
un dispositif de scellage par chauffage par induction (50, 50') comprenant une source d'alimentation CA (54) et une bobine d'induction (52) connectée à la source d'alimentation CA (54) et configurée pour induire des courants de Foucault dans le film métallisé (20d) pour un chauffage par induction du matériau d'emballage (20), dans lequel la source d'alimentation CA (54) est configurée pour générer un signal de tension ou de courant variable (S) d'une fréquence dans la plage de 1 MHz à 30 MHz, dans lequel le film métallisé (20d) comprend une couche de métal (20g) ayant une épaisseur au-dessous de 0,5 µm.

2. Système de scellage par chauffage par induction (40, 40') selon la revendication 1, dans lequel l'épaisseur de la couche de métal (20g) est comprise entre 20 et 70 nm.

3. Système de scellage par chauffage par induction (40, 40') selon la revendication 2, dans lequel l'épaisseur de la couche de métal (20g) est comprise entre 25 et 50 nm.

4. Système de scellage par chauffage par induction (40, 40') selon l'une quelconque des revendications précédentes, dans lequel la couche de métal (20g) a une résistance de feuille comprise entre 0,5 et 10 Ω/carré.

5. Système de scellage par chauffage par induction (40, 40') selon l'une quelconque des revendications précédentes, dans lequel la couche de métal (20g) est constituée d'aluminium.

6. Système de scellage par chauffage par induction (40, 40') selon l'une quelconque des revendications précédentes, dans lequel ladite fréquence est d'environ 2 MHz.

7. Système de scellage par chauffage par induction (40, 40') selon l'une quelconque des revendications précédentes 1 à 5, dans lequel ladite fréquence est d'environ 6,78 MHz, 13,56 MHz, ou 27,12 MHz.

8. Système de scellage par chauffage par induction (40, 40') selon l'une quelconque des revendications précédentes, dans lequel le matériau d'emballage (20) comprend une couche thermoplastique thermoscellable la plus à l'intérieur (20h) ayant une température de fusion inférieure à la température de fusion du film métallisé (20d).

9. Système de scellage par chauffage par induction (40, 40') selon l'une quelconque des revendications précédentes, dans lequel la bobine d'induction (52) est configurée pour fournir une étanchéité longitudinale (LS) à une bande en forme de tube de matériau d'emballage (22) ou pour fournir un scellage transversal à la bande en forme de tube du matériau d'emballage (22).

10. Machine de production d'emballages (10), comprenant au moins un système de scellage par chauffage par induction (40, 40') selon l'une quelconque des revendications précédentes.

11. Procédé de fabrication d'un contenant d'emballage, comprenant
la fourniture d'un matériau d'emballage ayant au moins une couche de film métallisé,
l'agencement d'au moins deux couches du matériau d'emballage au niveau d'une bobine d'induction d'un dispositif de scellage par chauffage par induction,
l'alimentation de la bobine d'induction avec une source d'alimentation CA pour générer un signal de tension ou de courant variable d'une fréquence dans la plage de 1 MHz à 30 MHz, et
le thermoscellage des au moins deux couches de matériau d'emballage en induisant des courants de Foucault dans le film métallisé pour un chauffage par induction du matériau d'emballage, dans lequel le film métallisé (20d) comprend une couche de métal (20g) ayant une épaisseur au-dessous de 0,5 µm.

12. Procédé selon la revendication 11, dans lequel la fréquence est d'environ 2 MHz.

13. Procédé selon la revendication 11, dans lequel la fréquence est d'environ 6,78 MHz, 13,56 MHz, ou 27,12 MHz.

14. Procédé selon l'une quelconque des revendications 11 à 13, dans lequel la bobine d'induction est orientée longitudinalement afin de fournir un scellage longitudinal du matériau d'emballage.

15. Procédé selon l'une quelconque des revendications 11 à 13, dans lequel la bobine d'induction est orientée transversalement afin de fournir un scellage transversal du matériau d'emballage.
